# EUROPEAN PATENT APPLICATION

(11) **EP 2 033 978 A1**
(43) Date of publication of application: **11.03.2009**
(21) Application number: 08172287.8
(22) Date of filing: 13.12.2005
(51) Int. Cl.: C08F 10/14, C08F 4/70, C08F 32/08

(54) **Method for producing norbornene based addition (co)polymer**

(30) Priority: 15.12.2004 JP 2004362448; 19.04.2005 JP 2005120897
(62) Divisional of application: 05816731.3
(71) Applicant: Nihon University, Tokyo 102-8275 (JP); JSR Corporation, Tokyo 104-0045 (JP)
(72) Inventor: Wakatsuki, Yasuo, Chiyoda-ku Tokyo 102-8275 (JP); Kaita, Shojiro, Nerima-ku, Tokyo 178-0062 (JP)
(74) Representative: TBK-Patent

(57) **Abstract**

By specifying a catalyst system (combination of catalyst and cocatalyst) which has high polymerization activity, a norbornene based addition (co)polymer is efficiently produced. Specifically, C₅H₅NiCH₃(PPh₃) as a catalyst and B(C₆F₅)₃ as a cocatalyst are used for producing a norbornene based addition polymer. Furthermore, C₅H₅NiCH₃ (PPh₃) as a catalyst and B(C₆F₅)₃ as a cocatalyst are used for producing an addition copolymer of norbornene and norbornene carboxylic acid methyl ester.

## Description

### Technical Field

The present invention relates to a method for producing a norbornene based addition (co)polymer.

### Background Art

Bicyclo[2.2.1]hept-2-ene is called "norbornene". Polymers obtained by addition polymerizing norbornene are transparent, hard and highly thermally stable, and are therefore expected to be applied to raw materials for CDs, DVDs or the like. Furthermore, copolymers obtained by addition polymerizing a norbornene derivative having a polar group and norbornene not only have high thermal stability but also have solubility and adhesion properties, and are therefore expected to be applied to insulating materials of printed circuit boards (interlayers of laminated circuit boards, and the like).

There have been proposed various catalysts for obtaining such norbornene based addition polymers and addition copolymers. However, any of the proposed catalysts have required improvement of their polymerization activity.
For instance, Patent Document 1 below discloses, as a specific example, addition polymerization of norbornene in toluene as a solvent with use of a catalyst including (C₅H₄CH₂COOCH₃)TiCl₃ or (C₅H₄CH₂CH₂OCH₃)TiCl₃ and a cocatalyst including methylaminoxane. Furthermore, Patent Document 1 also discloses addition copolymerization of norbornene and ethylene in toluene as a solvent with use of a catalyst including (C₅H₄CH₂COOCH₃)TiCl₃ and a cocatalyst including methylaminoxane.

Patent Document 2 below discloses, as a specific example, addition copolymerization of norbornene and butadiene in toluene as a solvent with use of allyl (hexachloroacetone) nickel trifluoroacetate as a catalyst.
Patent Document 3 below discloses, as a specific example, addition polymerization of norbornene in toluene as a solvent with use of methylisobutyl alumoxane and nickel bisacetylacetonate dihydrate as catalysts.
Patent Document 1: Japanese Patent Application Laid-Open No. H11-246617
Patent Document 2: Japanese Patent Application Laid-Open No. 2003-243000
Patent Document 3: Japanese Patent Application Laid-Open No. H10-168118

### Disclosure of the Invention

An object of the present invention is to specify a catalyst system (combination of catalyst and cocatalyst) which has high polymerization activity and thereby to enable a norbornene based addition (co) polymer to be efficiently produced.
The invention is directed to solving the foregoing problems, and a method for producing a norbornene based addition polymer of the invention includes addition polymerizing a norbornene based monomer in the presence of a catalyst (A) below and a cocatalyst (B) below.
(A) A catalyst including a complex in which at least a cyclopentadienyl ligand is coordinated to one transition metal selected from the 8th group, 9th group and 10th group elements in the periodic table.
(B) A cocatalyst including at least one compound selected from an organic aluminum compound (a), an ionic compound (b) capable of reacting with the catalyst (A) to generate a cationic transition metal compound and the compound (c) that promotes dissociation of a ligand of the complex that constitutes the catalyst (A).

A method for producing a norbornene based addition copolymer of the invention includes addition copolymerizing a norbornene based monomer and a monomer capable of being copolymerized with the norbornene based monomer in the presence of the catalyst (A) and the cocatalyst (B).

### [Catalyst (A)]

In a method for producing a norbornene based addition polymer of the invention and the method for producing the norbornene based addition copolymer of the invention, a complex expressed by the following formula (1) is preferably used as the catalyst (A).

MLₙK1_{X}K2_{Y}K3_{Z} (1)

(In the formula, M is one transition metal selected from the 8th group, 9th group and 10th group elements in the periodic table; L is a cyclopentadienyl ligand including cyclopentadienyl or a derivative thereof; K1, K2 and K3 are negative ligands or neutral ligands that are different from each other; n is an integer from 1 to 3; and X, Y and Z are integers from 0 to 7.)
Specific examples of M include iron (Fe), cobalt (Co), nickel (Ni), ruthenium (Ru), rhodium (Rh), palladium (Pd), platinum (Pt) and the like. Among these, cobalt, nickel, palladium and platinum are preferable elements from the viewpoint of enhancing the polymerization activity of the catalyst, and nickel and palladium are particularly preferably used.

Specific examples of the cyclopentadienyl derivatives for L include indenyl, fluorenyl, a substituted cyclopentadienyl in which a hydrogen atom of cyclopentadienyl is substituted by a hydrocarbon group having 1 to 20 carbon atoms, and the like. Furthermore, examples of the cyclopentadienyl derivatives also include derivatives in which a hydrogen atom of indenyl or fluorenyl is substituted by a hydrocarbon group having 1 to 20 carbon atoms.
Examples of substituent groups of the substituted cyclopentadienyl include a methyl group, ethyl group, n-propyl group, isopropyl group, n-butyl group, t-butyl group, phenyl group, benzyl group, neopentyl group, trimethylsilyl group and the like.

Examples of the substituent groups of substituted cyclopentadienyl also include polar substituent groups which have a heteroatom such as an oxygen atom, nitrogen atom, sulfur atom, phosphorus atom, halogen atom and the like. Examples thereof include an RO group, RCO group, ROCO group, RCOO group, R₂N group, R₂NCO group, NC group, RS group, RCS group, RSO group, R₂S group and the like. Here, R is a hydrocarbon group having 1 to 12 carbon atoms. When there are a plurality of Rs, these may be the same or different from each other. Specific examples of R include alkyl groups such as methyl, ethyl, n-propyl, isopropyl, n-butyl, t-butyl, hexyl, octyl and the like; aryl groups such as phenyl and the like; aralkyl groups such as benzyl and the like; and the like. Among these, alkyl groups having 1 to 4 carbon atoms are particularly preferable.

Furthermore, examples of the substituent groups of substituted cyclopentadienyl also include a methoxy group, ethoxy group, t-butoxy group, acetyl group, propionyl group, dimethylamino group, diethylamino group, nitrile group, dimethylaminocarbonyl group, diethylaminocarbonyl group and the like.
Preferable examples of L include cyclopentadienyl, a cyclopentadienyl having 1 to 5 methyl groups, phenylcyclopentadienyl, benzylcyclopentadienyl and indenyl.

Examples of the negative ligands for K1, K2 andK3 include the following:
a hydrogen atom; an oxygen atom; halogen atoms such as fluorine, chlorine, bromine, iodine and the like; straight chain or branched chain alkyl groups having 1 to 20 carbon atoms such as a methyl group, ethyl group, n-propyl group, isopropyl group, n-butyl group, t-butyl group, isobutyl group, octyl group, 2-ethylhexyl group and the like; aryl groups having 6 to 20 carbon atoms such as a phenyl group, tolyl group, xylyl group, benzyl group and the like; an alkyl aryl group and aryl alkyl group;
a hydroxyl group; alkoxy groups having 1 to 20 carbon atoms such as a methoxy group, ethoxy group, propoxy group, butoxy group and the like; aryloxy groups having 6 to 20 carbon atoms such as a phenoxy group, methylphenoxy group,
   2,6-dimethylphenoxy group, naphthyloxy group and the like; a dialkylamino group and diarylamino group having an alkyl substituent group having 1 to 20 carbon atoms such as a dimethylamino group, diethylamino group, di(n-propyl)amino group, di(isopropyl)amino group, di(n-butyl)amino group, di(t-butyl)amino group, di(isobutyl)amino group, diphenylamino group, methylphenylamino group and the like;
a π-allyl group; a substituted allyl group having 3 to 20 carbon atoms; an acetylacetonate group; a substituted acetylacetonate group having 5 to 20 carbon atoms; a substituted silyl group containing a silicon atom such as a trimethylsilyl group and the like; a carbonyl group; a carboxyl group; and the like.

Examples of the neutral ligands for K1, K2 and K3 include the following:
an oxygen molecule; a nitrogen molecule; ethylene; ethers such as diethyl ether, tetrahydrofuran and the like; nitriles such as acetonitrile, benzonitrile and the like; esters such as ethyl benzoate and the like; amines such as triethylamine, 2,2-bipyridine, phenanthroline and the like; trialkyl phosphines such as trimethyl phosphine, triethylphosphine and the like; triarylphosphines such as triphenylphosphine and the like;
substituted silyl groups containing a silicon atom such as (trimethylsilyl)methyl and the like; Lewis bases such as sulfoxides, isocyanides, phosphonic acids, thiocyanates and the like; and cyclic unsaturated hydrocarbons such as aromatic hydrocarbons such as benzene, toluene, xylene and the like, cycloheptatriene, cyclooctadiene, cyclooctatriene, cyclooctatetraene, derivatives thereof and the like.

In the formula (1), K1, K2 and K3 may be all negative ligands or neutral ligands, or any thereof may be a negative ligand and the rest may be neutral ligands.

### [Cocatalyst (B)]

The cocatalyst that is used in the method of the invention includes at least one compound selected from an organic aluminum compound (a), an ionic compound (b) capable of reacting with the catalyst (A) to generate a cationic transitionmetal compound and a compound (c) that promotes dissociation of a ligand of the complex that constitutes the catalyst (A). These may be used singularly or in combination thereof. (a)

The organic aluminum compound means an aluminum compound having a hydrocarbon group and examples thereof include an organic aluminum, a halogenated organic aluminum, a hydrogenated organic aluminum, and an organic aluminum oxy compound.

Examples of the organic aluminums include trimethylaluminum, triethylaluminum, triisobutylaluminum, trihexylaluminum, trioctylaluminum and the like. Examples of the halogenated organic aluminums include dimethylaluminum chloride, diethylaluminum chloride, sesquiethylaluminum chloride, ethylaluminum dichloride and the like.
Examples of the hydrogenated organic aluminums include diethylaluminum hydride, sesquiethylaluminum hydride and the like. The organic aluminum oxy compound is also called an aluminoxane and is a straight chain or cyclic polymer expressed by the general formula (-Al(R')O-)₁. Here, R' is a hydrocarbon group having 1 to 10 carbon atoms and may be partially substituted by a halogen atom and/or R' O group. 1 is polymerization degree, and is 5 or more, preferably 10 or more. Examples of R' include a methyl, ethyl, propyl and isobutyl group.

Preferable examples of the organic aluminum compounds
(a) include halogenated organic aluminum and organic aluminum oxy compounds. Particularly preferable are diethylaluminum chloride, sesquiethylaluminum chloride, methylaluminoxane, ethylaluminoxane and ethylchloroaluminoxane.
(b) Examples of the ionic compounds (b) capable of reacting with the catalyst (A) to generate a cationic complex include ionic compounds in which a non-coordinating anion exemplified below and a cation exemplified below are combined.

Examples of the non-coordinating anions include tetra(phenyl)borate, tetra(fluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(tetrafluoromethylphenyl)borate,tetra(tolyl)borate, tetra(xylyl)borate, (triphenyl, pentafluorophenyl)borate, [tris(pentafluorophenyl), phenyl]borate, tridecahydride-7,8-dicarbaundecaborate and the like.

Examples of the cations include a carbonium cation, an oxonium cation, an ammonium cation, a phosphonium cation, a cycloheptyltrienyl cation, a ferrocenium cation containing a transition metal and the like.
Specific examples of the carbonium cations include trisubstituted carbonium cations such as a triphenylcarbonium cation, a trisubstituted phenylcarbonium cation and the like. Specific examples of the trisubstituted phenylcarbonium cations include a tri(methylphenyl)carbonium cation, tri(dimethylphenyl)carbonium cation and the like.

Specific examples of the ammonium cations include trialkylammonium cations such as a trimethylammonium cation, a triethylammonium cation, a tripropylammonium cation, a tributylammonium cation, a tri(n-butyl) ammonium cation and the like; N,N-dialkylanilinium cations such as an N,N-diethylanilinium cation, an N,N-2,4,6-pentamethylanilinium cation and the like; and dialkylammonium cations such as a di (isopropyl) ammonium cation, a dicyclohexylammonium cation and the like.

Specific examples of the phosphonium cations include triarylphosphonium cations such as a triphenylphosphonium cation, a tri(methylphenyl)phosphonium cation, a tri(dimethylphenyl)phosphonium cation and the like.
Preferable examples of the ionic compounds (b) include trityl tetra(pentafluorophenyl)borate, triphenylcarbonium tetra(fluorophenyl)borate, N,N-dimethylanilinium tetra(pentafluorophenyl)borate, 1,1'-dimethylferrocenium tetra(pentafluorophenyl)borate and the like.
(c) Examples of the compounds (c) that promote dissociation of a ligand of the complex that constitutes the catalyst (A) include tris(pentafluorophenyl)boron, tris(monofluorophenyl)boron, tris(difluorophenyl)boron, triphenyl boron, biscyclooctadiene nickel and the like.

In the method of the invention, the usage ratio of the catalyst (A) and the cocatalyst (B) varies depending on various conditions and therefore cannot be uniquely determined. A/B (molar ratio) is usually 1/0.1 to 1/10,000, preferably 1/0.5 to 1/5,000 and more preferably 1/1 to 1/2,000.

### [Norbornene based Monomer]

In the invention, the norbornene based monomer means norbornene (that is, bicyclo[2.2.1]hept-2-ene) and derivatives thereof. The norbornene derivatives include a substituted norbornene in which a hydrogen atom of norbornene is substituted, tetracyclododecene having a structure in which two norbornene rings are condensed (that is, tetracyclo[4.4.1^{2,5}.1^{7,10}.0] -dodeca-3-ene) and a derivative thereof, and a compound having a structure in which three or more norbornene rings are condensed and a derivative thereof.

Among the norbornene derivatives, compounds below do not have an unsaturated bond other than a carbon-carbon unsaturated bond that takes part in polymerization reactions.
The compounds include:
5-methylbicyclo[2.2.1]hept-2-ene,
5-ethylbicyclo[2.2.1]hept-2-ene,
5-butylbicyclo[2.2.1]hept-2-ene,
5-hexylbicyclo[2.2.1]hept-2-ene,
5-decylbicyclo[2.2.1]hept-2-ene and the like;
tetracyclo[4.4.1^{2,5}.1^{7,10}.0] -dodeca-3-ene,
8-methyltetracyclo[4.4.1^{2,5}.1^{7,10}.0] -dodeca-3-ene,
8-ethyltetracyclo[4.4.1^{2,5}.1^{7,10}.0]-dodeca-3-ene and the like;
tricyclo[4.3.1^{2,5}.0]-deca-3-ene;
5-cyclohexylbicyclo[2.2.1]hept-2-ene,
5-cyclopentylbicyclo[2.2.1]hept-2-ene; and the like.

Among the norbornene derivatives, compounds below have an unsaturated bond other than a carbon-carbon unsaturated bond that takes part in polymerization reactions. The compounds include:
5-ethylidenebicyclo[2.2.1]hept-2-ene, 5-vinylbicyclo[2.2.1]hept-2-ene, 5-propenylbicyclo [2.2.1]hept-2-ene and the like, these having an unsaturated bond outside a norbornene ring;
8-methylidenetetracyclo[4.4.1^{2,5}.1^{7,10}.0]-dodeca-3-ene, 8-ethylidenetetracyclo[4.4.1^{2,5}.1^{7,10}.0]-dodeca-3-ene, 8-vinyltetracyclo[4.4.1^{2,5}.1^{7,10}.0] -dodeca-3-ene, 8-propenyltetracyclo[4.4.1^{2,5}.1^{7,10}.0]-dodeca-3-ene and the like, these having an unsaturated bond outside a
tetracyclo[4.4.1^{2,5}.1^{7,10}.0]-dodeca-3-ene ring; and

tricyclo[4.3.1^{2,5}.0]-deca-3, 7-diene, 5-cyclohexenylbicyclo[2.2.1]hept-2-ene, 5-cyclopentenylbicyclo[2.2.1]hept-2-ene and the like, these having a cyclic substituent group having an unsaturated bond outside a norbornene ring.
Among the norbornene derivatives, compounds below have an aromatic ring. The compounds include:
5-phenylbicyclo[2.2.1]hept-2-ene, tetracyclo[6.5.1^{2,5}.0^{1,6}.0^{8,13}]trideca-3,8,10,12-tetraene (also called "1,4-methano-1,4,4a,9a-tetrahydrofluorene"), tetracyclo[6.6.1^{2,5}.0^{1,6}.0^{8,13}]tetradeca-3,8,10,12-tetraene (also called "1,4-methano-1,4,4a,5,10,10a-hexahydroanthracene") and the like.

Among the norbornene derivatives, compounds below have a polar group. The compounds include:
norbornene carboxylic acid methyl ester (namely, 5-methoxycarbonylbicyclo[2.2.1]hept-2-ene), 5-ethoxycarbonylbicyclo[2.2.1]hept-2-ene, 5-methyl-5-methoxycarbonylbicyclo[2.2.1]hept-2-ene, 5-methyl-5-ethoxycarbonylbicyclo[2.2.1]hept-2-ene, bicyclo[2.2.1]hept-5-enyl-2-methylpropyonate, bicyclo[2.2.2]hept-5-enyl-2-methyloctanate, bicyclo[2.2.1]hept-2-ene-5,6-dicarboxylic acid anhydride, 5-hydroxymethylbicyelo[2.2.1]hept-2-ene, 5,6-di(hydroxymethyl)bicyclo[2.2.1]hept-2-ene, 5,5-di(hydroxymethyl)bicyclo[2.2.1]hept-2-ene, 5-hydroxy-isopropylbicyclo[2.2.1]hept-2-ene, 5,6-dicarboxybicyclo[2.2.1]hept-2-ene, 5-methoxycarbonyl-6-carboxybicyclo[2.2.1]hept-2-ene and the like, these bicyclo[2.2.1]hept-2-ene derivatives having a substituent group containing an oxygen atom;

8-methoxycarbonyltetracyclo[4.4.1^{2,5}.1^{7,10}.0]-dodeca-3-ene, 8-methyl-8-methoxycarbonyltetracyclo[4.4.1^{2,5}1^{7,10}.0]-dodec a-3-ene, 8-hydroxymethyltetracyclo[4.4.1^{2,5}.1^{7,10}.0]-dodeca-3-ene, 8-carboxytetracyclo[4.4.1^{2,5}.1^{7,10}.0]-dodeca-3-ene and the like, these tetracyclo[4.4.1^{2,5}.1^{7,10}.0]-dodeca-3-ene derivatives having a substituent group containing an oxygen atom; and

5-cyanobicyclo[2.2.1]hept-2-ene, bicyclo[2.2.1]hept-2-ene-5, 6-dicarboxylic acid imide and the like, these bicyclo[2.2.1]hept-2-ene derivatives having a substituent group containing a nitrogen atom.
Particularly preferable examples of the norbornene based monomers used in the invention include:
bicyclo[2.2.1]hept-2-ene, 5-methylbicyclo[2.2.1]hept-2-ene, 5-ethylbicyclo[2.2.1]hept-2-ene, 5-butylbicyclo[2.2.1]hept-2-ene, 5-hexylbicyclo[2.2.1]hept-2-ene, 5-decylbicyclo[2.2.1]hept-2-ene, tricyclo[4.3.1^{2,5}.0]-deca-3-ene, 5-cyclohexylbicyclo[2.2.1]hept-2-ene, 5-cyclopentylbicyclo[2.2.1]hept-2-ene, 5-ethylidenebicyclo[2.2.1]hept-2-ene, 5-vinylbicyclo[2.2.1]hept-2-ene, 5-propenylbicyclo[2.2.1]hept-2-ene and tricyclo[4.3.1^{2,5}.0]-deca-3,7-diene;

5-cyclohexenylbicyclo[2.2.1]hept-2-ene, 5-cyclopentenylbicyclo[2.2.1]hept-2-ene, 5-phenylbicyclo[2.2.1]hept-2-ene, tetracyclo[6.5.1^{2,5}.0^{1,6}.0^{8,13}] trideca-3,8,10,12-tetraene (also called "1,4-methano-1,4,4a,9a-tetrahydrofluorene"), 5-methoxycarbonylbicyclo[2.2.1]hept-2-ene, 5-ethoxycarbonylbicyclo[2.2.1]hept-2-ene, 5-methyl-5-methoxycarbonylbicyclo[2.2.1]hept-2-ene, 5-methyl-5-ethoxycarbonylbicyclo[2.2.1]hept-2-ene, bicyclo[2.2.1]hept-5-enyl-2-methyl propionate, and bicyclo[2.2.1]hept-5-enyl-2-methyloctanate: and

bicyclo[2.2.1]hept-2-ene-5,6-dicarboxylic acid anhydride, 5-hydroxymethylbicyclo[2.2.1]hept-2-ene, 5,6-di(hydroxymethyl)bicyclo[2.2.1]hept-2-ene, 5,5-di(hydroxymethyl)bicyclo[2.2.1]hept-2-ene, 5-hydroxy-isopropylbicyclo[2.2.1]hept-2-ene, 5,6-dicarboxybicyclo[2.2.1]hept-2-ene, 5-methoxycarbonyl-6-carboxybicyclo[2.2.1]hept-2-ene and 5-cyanobicyclo[2.2.1]hept-2-ene.

### [Monomers to be Copolymerized]

For the production of the norbornene based addition copolymer, the norbornene based monomer and the monomer capable of being copolymerized with the norbornene based monomer are addition copolymerized. Examples of the latter monomer other than the foregoing norbornene based monomers include the following compounds:

monocyclic olefin monomers such as cyclobutene, cyclopentene, cyclohexene, cycloheptene, cyclooctene and the like; cyclic conjugated diene monomers such as 1,3-cyclopentadiene, 1,3-cyclohexadiene, 1,3-cycloheptadiene, 1,3-cyclooctadiene and the like; α-olefins having 2 to 12 carbon atoms such as ethylene, propylene, 1-butene, 4-methyl, 1-pentene and the like; styrenes such as styrene, α-methylstyrene, p-methylstyrene, p-chlorostyrene and the like; chain conjugated dienes such as 1,3-butadiene, isoprene and the like; vinyl ethers such as ethylvinyl ether, isobutylvinyl ether and the like; and carbon monoxide.

The monomers to be copolymerized with the norbornene based monomer may be used singly or in combination of two or more kinds.

### [Polymerization Method]

In the method of producing the norbornene based addition (co) polymer of the invention, the polymerization may be carried out in bulk or solution. When the polymerization is carried out in bulk, a reaction injection molding (RIM) method may be adopted. In this case, a mixture of the monomers, the catalyst (A) and the cocatalyst (B) is put in a mold, and is then polymerized to form a molded product having a predetermined shape.

When the polymerization is carried out in a solution, it is necessary to use a solvent that does not adversely affect the catalyst activity. Examples of usable solvents include: aliphatic hydrocarbons such as pentane, hexane, heptane and the like; alicyclic hydrocarbons such as cyclohexane and the like; aromatic hydrocarbons such as benzene, toluene, xylene and the like; halogenated hydrocarbons such as dichloromethane, chloroform, chlorobenzene and the like; nitrogen-containing hydrocarbons such as nitromethane, nitrobenzene, acetonitrile and the like; and ethers such as diethyl ether, dioxane, tetrahydrofuran and the like. Mixed solvents of these may be used.

In the polymerization, the monomers to be polymerized, the catalyst (A) and the cocatalyst (B) are mixed. In mixing, the mixing order thereof is not particularly limited. For example, the catalyst (A) component and cocatalyst (B) may be mixed to give a reaction composition, and the reaction composition may be added to a solution containing the monomers to be polymerized. Alternatively, To a solution containing the monomers to be polymerized and the catalyst (A), the cocatalyst (B) may be added prior to initiating the polymerization. Furthermore, to a mixture solution containing the monomers to be polymerized and the cocatalyst (B), the catalyst (A) may be added.
Polymerization temperature is not particularly limited. It is usually in the range of -100 to 150°C and preferably in the range of -50 to 120°C. When the temperature is too low, the polymerization rate slows and when the temperature is too high, the catalyst activity deteriorates. When the polymerization temperature is selected in the above range, the polymerization rate and the molecular weight can be controlled.

Polymerization time is not particularly limited. For example, it is in the range of 1 min to 100 hr.
Furthermore, when the addition polymerization or addition copolymerization is carried out in the presence of the catalyst (A), the cocatalyst (B) and a molecular weight modifier including an α-olefin having 2 to 12 carbon atoms or styrene, the molecular weight of the obtainable norbornene based polymer or copolymer can be controlled. When the monomer to be copolymerized with norbornene is an α-olefin having 2 to 12 carbon atoms, styrene shall be used as the molecular weight modifier. When the monomer to be copolymerized with norbornene is styrene, an α-olefin having 2 to 12 carbon atoms shall be used as the molecular weight modifier.

### [Obtainable (Co)Polymer]

Whether the obtainable norbornene based (co)polymers according to the invention are highly soluble or completely insoluble in general solvents depends on the monomers used in the polymerization. When the (co) polymer obtained is soluble in a general solvent, the molecular weight thereof can be measured by gel permeation chromatography. From the viewpoint of achieving a good balance between characteristics such as solution viscosity, melt viscosity, mechanical strength and the like, the molecular weight of the norbornene based (co)polymer is preferably in the range of 10,000 to 1,000,000 and more preferably in the range of 50,000 to 500,000.

The norbornene addition polymer and an addition copolymer of norbornene and norbornene carboxylic acid methyl ester produced by the methods of the present invention have excellent heat resistance, low water absorption property, electric characteristics and the like. Accordingly, these can be used in many applications such as optical uses, medical uses, electrical uses, packaging materials, structural materials and the like.
More specific examples of the applications include: optical molded articles such as lenses, polarizing films and the like; electric insulating materials such as films, carrier tapes, film capacitors, flexible printed circuit boards and the like; medical containers such as press-through packages, infusion bags, chemical vials and the like; food packaging products such as wraps, trays and the like; casings such as electric appliances and the like; automobile interior parts such as inner panels and the like; and architectural materials such as car ports, glazing and the like.

### Best Mode for Carrying Out the Invention

In a preferable embodiment of the invention, a norbornene addition polymer is produced using the catalyst (A) and the cocatalyst (B), the catalyst being a complex expressed by the formula (1) wherein M is nickel (Ni) or palladium (Pd), L is cyclopentadienyl or indenyl and the other ligands are CH₃ (methyl) and PPh₃ (triphenyl phosphine) , or the other ligands are Cl (chlorine) and PPh₃, or C₃H₅ (allyl) , the cocatalyst being tris(pentafluorophenyl)boron [B(C₆F₅)₃], trityltetra(pentafluorophenyl)borate {[Ph₃C][B**(**C₆F₅**)**₄]} or the other ligands are methylaluminoxane (MAO).

Furthermore, an addition copolymer of norbornene and norbornene carboxylic acid methyl ester is produced using the catalyst (A) and the cocatalyst (B) , the catalyst being a complex expressed by the formula (1) wherein M is nickel (Ni) or palladium (Pd) , L is cyclopentadienyl and the other ligands are CH₃ (methyl) and PPh₃ (triphenyl phosphine) or the other ligands are C₃H₅ (allyl), the cocatalyst being B(C₆F₅)₃ or [Ph₃C][B(C₆F₅)₄].
In what follows, Examples of the invention are described.

The weight average molecular weight (Mw), number average molecular weight (Mn) and molecular weight distribution (Mw/Mn) of the polymers obtained in Examples were determined by means of GPC using polystyrene as standards. Furthermore, the composition ratio of norbornene and norbornene carboxylic acid methyl ester in the copolymer was calculated from an integral ratio of peaks [δ: 3.5-3.9 ("-COOMe" unit of norbornene carboxylic acid methyl ester) and δ: 0.8-3.0 ("-CH₂-" and "-CH=" units of norbornene and norbornene carboxylic acid methyl ester)] obtained by 1H-NMR.

### [Example 1]

A nitrogen-purged glass vessel was charged with 10 µmol of cyclopentadienyl(methyl)(triphenylphosphine)nickel [C₅H₅NiCH₃(PPh₃)] and 10 µmol of tris(pentafluorophenyl)boron [B(C₆F₅)₃] and was then charged with 5 ml of toluene to dissolve these. Subsequently, 5 ml of a toluene solution containing 4.70 g (0.05 mol) of norbornene was added to the solution and a polymerization reaction was carried out at room temperature for 10 min.

After the reaction was completed, the content in the vessel was poured into a large quantity of methanol to precipitate a polymer. The polymer was separated from the liquid by filtration and washed, and then dried at 60°C for 5 hr under reduced pressure to give 2.19 g of a polynorbornene. The polymerization activity was 1314 kg polymer/Ni-mol·h.
The obtained polymer was completely insoluble in solvents such as toluene, cyclohexane, THF, chloroform and the like, but was soluble in 1,1,2,2-tetrachloroethane, dichlorobenzene and the like under heating. By means of 1H-NMR spectrum, the polymer was identified to be a norbornene addition polymer.

### [Example 2]

A polymerization reaction was carried out in the same manner as in Example 1, except that the amount of C₅H₅NiCH₃(PPh₃) was changed to 2.5 µmol and 2.5 µmol of trityltetra(pentafluorophenyl)borate {[Ph₃C] (B(C₆F₅)₄]} was used in place of B(C₆F₅)₃.

As a result, 1.96 g of a polynorbornene was obtained. The polymerization activity was 4704 kg polymer/Ni-mol·h. The solubility of the obtained polymer was found to be the same as that of the polymer obtained in Example 1.

### [Example 3]

A polymerization reaction was carried out in the same manner as in Example 1, except that 10 µmol of cyclopentadienyl(triphenylphosphine)nickel chloride [C₅H₅NiCl(PPh₃)] was used in place of C₅H₅NiCH₃(PPh₃) and "MMAO-3A (trade name)" (toluene-soluble aluminoxane produced by Tosoh Finechem Corporation) was used in place of B(C₆F₅)₃ in such an amount that Al/Ni element ratio was 200.

As a result, 1.07 g of a polynorbornene was obtained. The polymerization activity was 214 kg polymer/Ni-mol·h. The solubility of the obtained polymer was found to be the same as that of the polymer obtained in Example 1.

### [Example 4]

A polymerization reaction was carried out in the same manner as in Example 2, except that 0.25 µmol of cyclopentadienyl (allyl)palladium [C₅H₅PdC₃H₅] was used in place of C₅H₅NiCH₃(PPh₃) and the amount of [Ph₃C] [B(C₆F₅)₄] was changed to 0.25 µmol.

As a result, 4.38 g of a polynorbornene was obtained. The polymerization activity was 105120 kg polymer/Pd-mol·h. It was found that the obtained polymer was completely insoluble in toluene, cyclohexane, THF, chloroform, 1,1,2,2-tetrachloroethane, dichlorobenzene and the like even under heating.

### [Example 5]

A polymerization reaction was carried out in the same manner as in Example 4, except that 10 µmol of indenyl(allyl)palladium [C₉H₇PdC₃H₅] was used in place of C₅H₅PdC₃H₅ and the amount of [Ph₃C] [B(C₆F₅)₄] was changed to 10 µmol.

As a result, 4.70 g of a polynorbornene was obtained. The polymerization activity was 2820 kg polymer/Pd-mol·h. The solubility of the obtained polymer was found to be the same as that of the polymer obtained in Example 3.

### [Example 6]

A nitrogen-purged glass vessel was charged with 20 µmol of cyclopentadienyl(methyl)(triphenylphosphine)nickel [C₅H₅NiCH₃(PPh₃)], then with 20 µmol of tris (pentafluorophenyl) boron [B (C₆F₅)₃], and further then with 5 ml of toluene to dissolve these. Subsequently, 5 ml of a toluene solution containing 1.41 g (0.015 mol) of norbornene (NB) and 0. 77 g (0.005 mol) of norbornene carboxylic acid methyl ester (NBC) was added to the solution, and a polymerization reaction was carried out at room temperature for 15 min.

After the reaction was completed, the content in the vessel was poured into a large quantity of methanol to precipitate a polymer. The polymer was separated from the liquid by filtration and washed, and then dried at 60°C for 5 hr under reduced pressure to give 1.04 g of a polymer.
The obtained polymer was readily soluble in solvents such as THF, chloroform and the like. The molecular weights of the polymer were measured by means of GPC and the results showed Mw = 735500, Mn = 406800 and the molecular weight distribution (Mw/Mn) = 1.81. Furthermore, by means of 1H-NMR spectrum, the composition ratio of norbornene/norbornene carboxylic acid methyl ester in the copolymer was found to be 84.8/15.2 in molar ratio.

### [Example 7]

A polymerization reaction was carried out in the same manner as in Example 6, except that the amount of norbornene was changed to 0.94 g (0.010 mol), the amount of norbornene carboxylic acid methyl ester was changed to 1.53 g (0.010 mol) and polymerization reaction time was 30 min.

As a result, 0.59 g of a polymer was obtained. It was found that the molecular weights were Mw = 362000 and Mn =193200, and that the molecular weight distribution was (Mw/Mn) = 1.87. It was also found that the composition ratio of norbornene/norbornene carboxylic acid methyl ester in the polymer was 67.9/32.1 in molar ratio.

### [Example 8]

A polymerization reaction was carried out in the same manner as in Example 6, except that the amount of norbornene was changed to 0.47 g (0.005 mol), the amount of norbornene carboxylic acid methyl ester was changed to 2.23 g (0.015 mol) and polymerization reaction time was 120 min.

As a result, 0.13 g of a polymer was obtained. It was found that the molecular weights were Mw = 242200 and Mn = 124600, and that the molecular weight distribution was (Mw/Mn) = 1.94. It was also found that the composition ratio of norbornene/norbornene carboxylic acid methyl ester in the polymer was 43.5/56.5 in molar ratio.

### [Example 9]

A polymerization reaction was carried out in the same manner as in Example 6, except that cyclopentadienyl (allyl) palladium [C₅H₅PdC₃H₅] was used in place of C₅H₅NiCH₃(PPh₃) and trityltetra(pentafluorophenyl)borate [Ph₃C] [B (C₆F₅)₄] was used in place of B (C₆F₅)₃.

As a result, 0.64 g of a polymer was obtained. It was found that the obtained polymer was completely insoluble in toluene, cyclohexane, THF, chloroform, 1,1,2,2-tetrachloroethane, dichlorobenzene and the like even under heating. Accordingly, the composition ratio of norbornene/norbornene carboxylic acid methyl ester in the polymer could not be determined.

### [Example 10]

A polymerization reaction was carried out in the same manner as in Example 9, except that the amount of norbornene was changed to 0.94 g (0.010 mol), the amount of norbornene carboxylic acid methyl ester was changed to 1.53 g (0.010 mol) and polymerization reaction time was 120 min.

As a result, 0.42 g of a polymer was obtained. The obtained polymer was completely insoluble in solvents such as toluene, cyclohexane, THF, chloroform and the like, but was soluble in 1,1,2,2-tetrachloroethane, dichlorobenzene and the like under heating. The composition ratio of norbornene/norbornene carboxylic acid methyl ester in the polymer was found to be 91.1/8.9 in molar ratio.

### [Example 11]

A polymerization reaction was carried out in the same manner as in Example 9, except that the amount of norbornene was changed to 0.47 g (0.005 mol), the amount of norbornene carboxylic acid methyl ester was changed to 2.23 g (0.015 mol) and polymerization reaction time was 120 min.

As a result, 0.38 g of a polymer was obtained. The obtained polymer was readily soluble in solvents such as THF, chloroform and the like. The molecular weights thereof were Mw =176100 and Mn = 72000, and the molecular weight distribution was (Mw/Mn) = 2.45. The composition ratio of norbornene/norbornene carboxylic acid methyl ester in the polymer was found to be 72.7/27.3 in molar ratio.
Glass transition temperature (T_{g}) and melting temperature (Tₘ) were measured for the polymers obtained in Examples 1 to 11 by means of DSC. Neither peaks of Tg nor those of Tₘ were observed in the range of -50 to 300°C.

The results of Examples 1 to 11 are shown below. The results of Examples 1 to 5 where norbornene was homopolymerized are shown in Table 1 and the results of Examples 6 to 11 where norbornene and norbornene carboxylic acid were copolymerized are shown in Table 2.

**[Table 1]**

| | Monomer | Catalyst | Cocatalyst | Monomer/ Catalyst | Yield | Polymerization Activity |
|---|---|---|---|---|---|---|
| Example 1 | Norbornene | C₅H₅NiCH₃(PPh₃) | B (C₆F₅)₃ | 5000 | 47% | 1314 |
| Example 2 | Norbornene | C₅H₅NiCH₃(PPh₃) | [Ph₃C] [B(C₆F₅)₄] | 20000 | 42% | 4704 |
| Example 3 | Norbornene | C₅H₅NiCl(PPh3) | MMAO | 5000 | 23% | 214 |
| Example 4 | Norbornene | C₅H₅PdC₃H₅ | [Ph₃C] [B(C₆F₅)₄] | 200000 | 93% | 105120 |
| Example 5 | Norbornene | C₉H₇PdC₃H₅ | [Ph₃C] [B(C₆F₅)₄] | 5000 | 100% | 2820 |

**[Table 2]**

| | NB/NBC of Monomers | Catalyst | Cocatal yst | Monomers /Catalys t | Polymeriza tion Time (min) | Yield (%) | NB/NBC in Polymer | Polymeriza tion Activity |
|---|---|---|---|---|---|---|---|---|
| Example 6 | 75/25 | C₅H₅NiCH₃ ( PPh₃) | B(C₆F₅)₃ | 1000 | 15 | 47 | 83.4/16.6 | 208 |
| Example 7 | 50/50 | C₅H₅NiCH₃ ( PPh₃) | B(C₆F₅)₃ | 1000 | 30 | 27 | 67.9/32.1 | 59 |
| Example 8 | 25/75 | C₅H₅NiCH₃ ( PPh₃) | B(C₆F₅)₃ | 1000 | 120 | 5 | 43.5/56.5 | 3.3 |
| Example 9 | 75/25 | C₅H₅PdC₃H₅ | [Ph₃C] [B (C₆F₅)₄] | 1000 | 15 | 29 | Could not be determined | 128 |
| Example 10 | 50/50 | C₅H₅PdC₃H₅ | [Ph₃C] [B (C₆F₅)₄] | 1000 | 30 | 17 | 91.1/8.9 | 42 |
| Example 11 | 25/75 | C₅H₅PdC₃H₅ | [Ph₃C] [B (C₆F₅)₄] | 1000 | 120 | 14 | 72.7/27.3 | 9.5 |

### [Example 12]

A nitrogen-purged glass vessel was charged with 50 µmol of cyclopentadienyl(methyl)(triphenylphosphine)nickel [C₅H₅NiCH₃(PPh₃)], then with 150 µmol of tris (pentafluorophenyl) boron [B(C₆F₅)₃], and further then with 5 ml of toluene to dissolve these. Subsequently, 5 ml of a toluene solution containing 14.1 g (0.15 mol) of norbornene and 7.65 g (0.05 mol) of norbornene carboxylic acid methyl ester was added to the solution, and a polymerization reaction was carried out at 80°C for 60 min.

After the reaction was completed, the content in the vessel was poured into a large quantity of methanol to precipitate a polymer. The polymer was separated from the liquid by filtration and washed, and then dried at 60°C for 5 hr under reduced pressure to give 8.0 g of a polymer.
The obtained polymer was readily soluble in solvents such as THF, chloroform and the like. The molecular weights of the polymer were measured by means of GPC and the results showed Mw = 925000, Mn = 497800 and the molecular weight distribution (Mw/Mn) = 1.86. Furthermore, by means of 1H-NMR spectrum, the composition ratio of norbornene/norbornene carboxylic acid methyl ester in the copolymer was determined to be 83.2/16.8 in molar ratio.

### [Example 13]

A nitrogen-purged glass vessel was charged with 50 µmol of cyclopentadienyl(methyl)(triphenylphosphine)nickel [C₅H₅NiCH₃(PPh₃)], then with 150 µmol of tris (pentafluorophenyl) boron [B(C₆F₅)₃], and further then with 5ml of toluene to dissolve these. Subsequently, 5 ml of a toluene solution containing 14.1 g (0.15 mol) of norbornene and 7.65 g (0.05 mol) of norbornene carboxylic acid methyl ester was added to the solution, and 0.01 mol of styrene was further added. Then, a polymerization reaction was carried out at 80°C for 180 min.

After the reaction was completed, the content in the vessel was poured into a large quantity of methanol to precipitate a polymer. The polymer was separated from the liquid by filtration and washed, and then dried at 60°C for 5 hr under reduced pressure to give 8.1 g of a polymer.
The obtained polymer was readily soluble in solvents such as THF, chloroform and the like. The molecular weights of the polymer were measured by means of GPC and the results showed Mw = 268000, Mn = 127000 and the molecular weight distribution (Mw/Mn) = 2.12. Furthermore, by means of 1H-NMR spectrum, the composition ratio of norbornene/norbornene carboxylic acid methyl ester in the copolymer was determined to be 82.2/17.8 in molar ratio.

### [Example 14]

A polymerization reaction was carried out in the same manner as in Example 13, except that 0.01 mol of 1-hexane was added in place of styrene. After the reaction was completed, the content in the vessel was poured into a large quantity of methanol to precipitate a polymer. The polymer was separated from the liquid by filtration and washed, and then dried at 60°C for 5 hr under reduced pressure to give 6.1 g of a polymer.

The obtained polymer was readily soluble in solvents such as THF, chloroform and the like. The molecular weights of the polymer were measured by means of GPC and the results showed Mw = 218000, Mn = 95000 and the molecular weight distribution (Mw/Mn) = 2.30. Furthermore, by means of 1H-NMR spectrum, the composition ratio of norbornene/norbornene carboxylic acid methyl ester in the copolymer was determined to be 83.8/16.2 in molar ratio.
The results of Examples 12 to 14 are shown in Table 3.

**[Table 3]**

| | NB/NBC of Monomers | Catalyst | Cocatal yst | Molecular Weight Modifier | | Molecular Weight | | Mw/Mn | NB/NBC in Polymer |
|---|---|---|---|---|---|---|---|---|---|
| | | | | Type | Addition Amount* | Mw | Mn | | |
| Example 12 | 75/25 | C₅H₅NiCH₃ (PPh₃) | B(C₆F₅)₃ | Not added | | 925000 | 497800 | 1.86 | 83.2/16. 8 |
| Example 13 | 75/25 | C₅H₅NiCH₃ (PPh₃) | B(C₆F₅)3 | Styrene | 200 | 268000 | 127000 | 2.12 | 82.2/17. 8 |
| Example 14 | 75/25 | C₅H₅NiCH₃ (PPh₃) | B(C₆F₅)₃ | 1-Hexene | 200 | 218000 | 95000 | 2.30 | 83.8/16. 2 |

| | | | | | | | | | |
|---|---|---|---|---|---|---|---|---|---|
| * Molar ratio to catalyst | | | | | | | | | |

As obvious from the results, it is found that when the NB/NBC ratios (composition ratio of norbornene/norbornene carboxylic acid methyl ester), types and amounts of the catalyst and cocatalyst used and the conditions of the polymerization were the same, whether the molecular weight modifier was added or not influenced the number average molecular weights (Mn) of the obtained copolymers. Namely, the use of molecular weight modifier controlled the number average molecular weight to be about 127000 (Example 13) or about 95000 (Example 14). On the other hand, in the absence of the molecular weight modifier, the number average molecular weight was about 490000.

### [Example 15]

In a nitrogen-purged glass vessel, 5 ml of a toluene solution containing 1.41 g (0.015 mol) of norbornene, 0.77 g (0.005 mol) of 5-norbornene-2-carboxylic acid methyl ester and 60 µmol of tris(pentafluorophenyl)boron [B(C₆F₅)₃] that was a cocatalyst was prepared. Subsequently, 5 ml of a toluene solution containing 20 µmol of cyclopentadienyl(methyl)(tricyclohexylphosphine)nickel [C₅H₅NiCH₃(PCy₃)] that was a catalyst was added to the solution, and a polymerization reaction was carried out at room temperature for 120 min.

After the reaction was completed, the content in the vessel was poured into a large quantity of methanol to precipitate a polymer. The polymer was separated from the liquid by filtration and washed, and then dried at 60°C for 5 hr under reduced pressure to give 0.90 g of a polymer.
The obtained polymer was readily soluble in general solvents such as toluene, THF, chloroform and the like. The molecular weights of the polymer were measured by means of GPC and the results showed Mw = 805100, Mn = 491800 and the molecular weight distribution (Mw/Mn) = 1.85. Furthermore, by means of 1H-NMR spectrum, the composition ratio of norbornene/5-norbornene-2-carboxylic acid methyl ester in the copolymer was determined to be 84.7/15.3 in molar ratio.

### [Example 16]

A polymerization reaction was carried out in the same manner as in Example 15, except that a toluene solution of a catalyst was used which contained 20 µmol of cyclopentadienyl(triphenylphosphine)nickel chloride [C₅H₅NiCl(PPh₃)] and 20 µmol of trimethyl aluminum.

As a result, 1.50 g of a polymer was obtained. The obtained polymer was readily soluble in general solvents such as toluene, THF, chloroform and the like. The molecular weights and the molecular weight distribution of the polymer, and the composition ratio of norbornene/5-norbornene-2-carboxylic acid methyl ester in the copolymer were measured and found to be almost the same as those of the polymer obtained in Example 15.

### [Example 17]

A polymerization reaction was carried out in the same manner as in Example 15, except that a toluene solution of a catalyst was used which contained 20 µmol of cyclopentadienyl(methyl)(tricyclohexylphosphine)nickel [C₅H₅NiCH₃(PCy₃)].

As a result, 1.75 g of a polymer was obtained. The obtained polymer was readily soluble in general solvents such as toluene, THF, chloroform and the like. The molecular weights and the molecular weight distribution of the polymer, and the composition ratio of norbornene/5-norbornene-2-carboxylic acid methyl ester in the copolymer were measured and found to be almost the same as those of the polymer obtained in Example 15.

### [Example 18]

A polymerization reaction was carried out in the same manner as in Example 15, except that a toluene solution of a catalyst was used which contained 20 µmol of cyclopentadienylcarboxylic acid methyl ester(triphenylphosphine)nickel bromide [(C₆H₄COOMe)NiBr(PPh₃)] and 20 µmol of trimethyl aluminum.

As a result, 0.90 g of a polymer was obtained. The obtained polymer was readily soluble in general solvents such as toluene, THF, chloroform and the like. The molecular weights and the molecular weight distribution of the polymer, and the composition ratio of norbornene/5-norbornene-2-carboxylic acid methyl ester in the copolymer were measured and found to be almost the same as those of the polymer obtained in Example 15.

### [Example 19]

A polymerization reaction was carried out in the same manner as in Example 15, except that a toluene solution of a catalyst was used which contained 20 µmol of ethylcyclopentadienyl(triphenylphosphine)nickel chloride [(C₅H₄Et)NiCl(PPh₃)] and 20 µmol of trimethyl aluminum.

As a result, 1.90 g of a polymer. The obtained polymer was readily soluble in general solvents such as toluene, THF, chloroform and the like. The molecular weights and the molecular weight distribution of the polymer, and the composition ratio of norbornene/5-norbornene-2-carboxylic acid methyl ester in the copolymer were measured and found to be almost the same as those of the polymer obtained in Example 15.

### [Example 20]

A polymerization reaction was carried out in the same manner as in Example 15, except that a toluene solution of a catalyst was used which contained 20 µmol of cyclopentadienyl(triphenylphosphate)nickel chloride [(C₅H₅)NiCl(P(OPh)₃)] and 20 µmol of trimethyl aluminum.

As a result, 1.35 g of a polymer was obtained. The obtained polymer was readily soluble in general solvents such as toluene, THF, chloroform and the like. The molecular weights and the molecular weight distribution of the polymer, and the compositionratioofnorbornene/5-norbornene-2-carboxylicacid methyl ester in the copolymer were measured and found to be almost the same as those of the polymer obtained in Example 15.

### [Example 21]

A polymerization reaction was carried out in the same manner as in Example 15, except that a toluene solution of a catalyst was used which contained 20 µmol of pentamethylcyclopentadienyl(triphenylphosphine)nickel bromide [C₅Me₅NiBr(PPh₃)] and 20 µmol of trimethyl aluminum.

As a result, 0.95 g of a polymer was obtained. The obtained polymer was readily soluble in general solvents such as toluene, THF, chloroform and the like. The molecular weights and the molecular weight distribution of the polymer, and the composition ratio of norbornene/5-norbornene-2-carboxylic acid methyl ester in the copolymer were measured and found to be almost the same as those of the polymer obtained in Example 15.

### [Example 22]

In a nitrogen-purged glass vessel, 5 ml of a toluene solution containing 1.76 g (0.01875 mol) of norbornene, 1.45 g (0.00625 mol) of 8-methyl-8-methoxycarbonyltetracyclo[4.4.1^{2,5}.1^{7,10}.0] -dodeca -3-ene and 100 µmol of tris(pentafluorophenyl)boron [B(C₆F₅)₃] that was a cocatalyst was prepared. Subsequently, 5 ml of a toluene solution containing 10 µmol of cyclopentadienyl(methyl)(triphenylphosphine)nickel [C₅H₅NiCH₃(PPh₃)] that was a catalyst was added to the solution, and a polymerization reaction was carried out at room temperature for 12 hr.

After the reaction was completed, the content in the vessel was poured into a large quantity of methanol to precipitate a polymer. The polymer was separated from the liquid by filtration and washed, and then dried at 60°C for 5 hr under reduced pressure to give 0.26 g of a polymer.
The obtained polymer was readily soluble in general solvents such as toluene, THF, chloroform and the like. The molecular weights of the polymer were measured by means of GPC and the results showed Mw = 352000, Mn = 135400 and the molecular weight distribution (Mw/Mn) = 2.60. Furthermore, by means of 1H-NMR spectrum, the composition ratio of norbornene/8-methyl-8-methoxycarbonyltetracyclo[4.4.1^{2,5}. 1^{7,10}.0]-dodeca-3-ene in the copolymer was determined to be 85.5/15.5 in molar ratio.

### [Example 23]

A polymerization reaction was carried out in the same manner as in Example 22, except that a toluene solution of a catalyst was used which contained 10 µmol of cyclopentadienyl(triphenylphosphine)nickel chloride [C₅H₅NiCl(PPh₃)] and 10 µmol of trimethyl aluminum.

As a result, 1.98 g of a polymer was obtained. The obtained polymer was readily soluble in general solvents such as toluene, THF, chloroform and the like. The molecular weights and the molecular weight distribution of the polymer, and the composition ratio of norbornene/8-methyl-8-methoxycarbonyltetracyclo[4.4.1^{2,5}.1^{7,1 0}.0]-dodeca-3-ene in the copolymer were measured and found to be almost the same as those of the polymer obtained in Example 22.

### [Example 24]

In a nitrogen-purged glass vessel, 30 ml of a toluene solution containing 6.58 g (0.07 mol) of norbornene, 4.53 g (0.03 mol) of 4-butyl norbornene and 120 µmol of tris (pentafluorophenyl) boron [B(C₆F₅)₃] that was a cocatalyst was prepared. Subsequently, 5 ml of a toluene solution containing 10 µmol of cyclopentadienyl(triphenylphosphine)nickel chloride [C₅H₅NiCl(PPh₃)] that was a catalyst and 40 µmol of trimethyl aluminum was added to the solution, and a polymerization reaction was carried out at room temperature for 1 hr.

After the reaction was completed, the content in the vessel was poured into a large quantity of methanol to precipitate a polymer. The polymer was separated from the liquid by filtration and washed, and then dried at 60°C for 5 hr under reduced pressure to give 8.85 g of a polymer.
The obtained polymer was readily soluble in general solvents such as toluene, THF, chloroform and the like. The molecular weights of the polymer were measured by means of GPC and the results showed Mw = 1086000, Mn = 453000 and the molecular weight distribution (Mw/Mn) = 2.40. Furthermore, by means of 1H-NMR spectrum, the composition ratio of norbornene/4-butyl norbornene in the copolymer was determined to be 59.0/41.0 in molar ratio.

### Industrial Applicability

The specific catalyst (A) and cocatalyst (B) in combination enables efficiently production of norbornene based addition (co)polymers.
This application is a divisional application of European patent application no. 05816731.3 (the "parent application"), also published under no. EP-A-1826221. The original claims of the parent application are repeated below in the present specification and form part of the content of this divisional application as filed.
1. A method for producing a norbornene based addition polymer, comprising addition polymerizing a norbornene based monomer in the presence of a catalyst (A) below and a cocatalyst (B) below:
   (A) a catalyst comprising a complex in which at least a cyclopentadienyl ligand is coordinated to one transition metal selected from the 8th group, 9th group and 10th group elements in the periodic table;
   (B) a cocatalyst comprising at least one compound selected from an organic aluminum compound (a), an ionic compound (b) capable of reacting with the catalyst (A) to generate a cationic transition metal compound and a compound (c) that promotes dissociation of a ligand of the complex that constitutes the catalyst (A).
2. The method for producing a norbornene based addition polymer as described in item 1, wherein the catalyst (A) comprises a complex expressed by the following formula (1):

   MLₙK1_{X}K2_{Y}K3_{Z} (1)

   (wherein, M is one transition metal selected from the 8th group, 9th group and 10th group elements in the periodic table; L is a cyclopentadienyl ligand comprising cyclopentadienyl or a derivative thereof; K1, K2 and K3 are negative ligands or neutral ligands that are different from each other; n is an integer from 1 to 3; and X, Y and Z are integers from 0 to 7.)
3. A method for producing a norbornene based addition copolymer, comprising addition copolymerizing a norbornene based monomer and a monomer capable of being copolymerized with the norbornene based monomer in the presence of a catalyst (A) below and a cocatalyst (B) below:
   (A) a catalyst comprising a complex in which at least a cyclopentadienyl ligand is coordinated to one transition metal selected from the 8th group, 9th group and 10th group elements in the periodic table;
   (B) a cocatalyst comprising at least one compound selected from an organic aluminum compound (a), an ionic compound (b) capable of reacting with the catalyst (A) to generate a cationic transition metal compound and a compound (c) that promotes dissociation of a ligand of the complex that constitutes the catalyst (A).
4. The method for producing a norbornene based addition copolymer as described in item 3, wherein the catalyst (A) comprises a complex expressed by the following formula (1):

   MLₙK1_{X}K2_{Y}K3_{Z} (1)

   (wherein, M is one transition metal selected from the 8th group, 9th group and 10th group elements in the periodic table; L is a cyclopentadienyl ligand comprising cyclopentadienyl or a derivative thereof; K1, K2 and K3 are negative ligands or neutral ligands that are different from each other; n is an integer from 1 to 3; and X, Y and Z are integers from 0 to 7.)
5. The method for producing a norbornene based addition copolymer as described in item 3, wherein a molecular weight modifier comprising an α-olefin having 2 to 12 carbon atoms or styrene is used in addition copolymerizing the norbornene based monomer and the monomer capable of being copolymerized with the norbornene based monomer in the presence of the catalyst (A) and the cocatalyst (B).

## Claims

1. A method for producing a norbornene based addition polymer, comprising addition polymerizing a norbornene based monomer in the presence of a catalyst (A) below and a cocatalyst (B) below:
(A) a catalyst comprising a complex expressed by the following formula (1):
MLₙK1ₓK2_{y}K3_{z} (1)
(wherein, M is nickel (Ni) or palladium (Pd); L is a cyclopentadienyl or indenyl and the other ligands are CH₃ (methyl) and PPh₃ (triphenyl phosphine), or the other ligands are Cl (chlorine) and PPh₃, or C₃H₅ (allyl));
(B) a cocatalyst selected from tris(pentafluorophenyl)boron, trityltetra(pentafluorophenyl)borate, or methylaluminoxane.

2. The method for producing a norbornene based addition polymer according to claim 1 or 2, wherein said norbornene based monomer is copolymerized with a monomer capable of being copolymerized with the norbornene based monomer.

3. The method for producing a norbornene based addition copolymer as claimed in claim 2, wherein a molecular weight modifier comprising an α-olefin having 2 to 12 carbon atoms or styrene is used in addition copolymerizing the norbornene based monomer and the monomer capable of being copolymerized with the norbornene based monomer in the presence of the catalyst (A) and the cocatalyst (B).
